# Europäisches Patentamt

## European Patent Office

## Office européen des brevets

(19)

(11) Veröffentlichungsnummer: **0 100 765**
**B1**

(12) **EUROPÄISCHE PATENTSCHRIFT**

(45) Veröffentlichungstag der Patentschrift:
22.07.87

(51) Int. Cl.⁴: **C 07 C 17/38, C 02 F 1/26**

(21) Anmeldenummer: **83890074.4**

(22) Anmeldetag: **09.05.83**

(54) Verfahren zur Abtrennung und Rückgewinnung von halogenierten Kohlenwasserstoffen.

(30) Priorität: 04.06.82 AT 2169/82

(43) Veröffentlichungstag der Anmeldung:
15.02.84 Patentblatt 84/7

(45) Bekanntmachung des Hinweises auf die Patenterteilung:
22.07.87 Patentblatt 87/30

(84) Benannte Vertragsstaaten:
BE CH DE FR GB IT LI NL

(56) Entgegenhaltungen:
EP-A-0 013 659
DE-A-2 638 650

(73) Patentinhaber: VEREINIGTE EDELSTAHLWERKE AKTIENGESELLSCHAFT (VEW), Elisabethstrasse 12, A-1010 Wien (AT)

(72) Erfinder: Marr, Rolf, Prof. Dipl.- Ing. Dr., Eschengasse 5, A-8043 Graz (AT)
Erfinder: Siebenhofer, Matthäus, Dipl.- Ing. Dr., Evangelimanngasse 19, A-8010 Graz (AT)
Erfinder: Rückl, Wilfried, Dipl.- Ing., Grevenberggasse 36a, A-8053 Graz (AT)

(74) Vertreter: Jellinek, Gerhard, Dr., Vereinigte Edelstahlwerke AG (VEW) Elisabethstrasse 12, A-1010 Wien (AT)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Abtrennung und Rückgewinnung von halogenierten Kohlenwasserstoffen aus wässrigen Systemen mittels flüssig-flüssig-Extraktion mit Paraffinölen, Phasentrennung und Destillation der organischen Phase.

Halogenierte Kohlenwasserstoffe sind in vielen Abwässern und Waschwässern enthalten, welche beispielsweise von Metallwasch- und Beizanlagen stammen, wo sie insbesondere zum Entfetten von Metallteilen dienen.

Die halogenierten Kohlenwasserstoffe, wie Chloroform oder 1,1,1-Trichloräthan, sind zwar meist nur in geringen Konzentrationen in derartigen wässrigen Systemen vorhanden, sie wirken aber dennoch stark unweltbelastend, da sie den Ablauf einer Vielzahl natürlicher biologischer Prozesse blockieren. Halogenierte Kohlenwasserstoffe behindern z.B. eine Abwasserreinigung durch Belebtschlamm, da sie den Schlamm geradezu zerstören.

Es ist bekannt, halogenierte Kohlenwasserstoffe in Schwerkraftabscheidern aus Abwässern abzutrennen. Auch Abstreifen solcher Abwässer mit Luft und Adsorption der von der Luft aufgenommenen Dämpfe der halogenierten Kohlenwasserstoffe an Aktivkohlefiltern ist ein häufig ausgeübtes Verfahren. Diese Methoden sind jedoch nicht zufriedenstellend, da sie entweder unzureichende Abtrenn- bzw. Reinigungseffekte erzielen oder apparativ und im Hinblick auf die erforderlichen Betriebsmittel einen zu großen Aufwand erfordern. Weiters ist eine Rückgewinnung der halogenierten Kohlenwasserstoffe wirtschaftlich meist nicht vertretbar.

Es wurde auch schon vorgeschlagen, eine flüssig-flüssig-Extraktion beladener Abwässer mit höheren halogenierten Kohlenwasserstoffen vorzunehmen; eine solche Vorgangsweise stellt jedoch lediglich eine Verschiebung und keine Lösung des Problems dar.

Aus der EP-A 13 659 ist bekannt geworden, halogenhaltige Kohlenwasserstoffe aus Wasser mittels Paraffinölen zu extrahieren, und nach Phasentrennung die organische Phase zu destillieren. Es sind dort für die Extraktion 1-10g Paraffinöl pro Liter Wasser genannt. Der Reinigungsgrad ist mit bloß 80 - 95 % angegeben, ist also nicht hoch genug, um den Anforderungen modernen Umweltschutzes gerecht zu werden.

Die Erfindung stellt sich die Aufgabe, die dargelegten Schwierigkeiten zu überwinden und ein Verfahren zu entwickeln, mit dem halogenierte Kohlenwasserstoffe aus wässrigen Systemen einfach und betriebssicher rückgewonnen und gleichzeitig ein gereinigtes wässriges System ohne Gehalt an zusätzlichen Schadstoffen erhalten werden kann.

Die gestellte Aufgabe wird bei einem Verfahren der eingangs definierten Art dadurch gelöst, daß die Extraktion im Gegenstrom in einer Kolonne, in welcher in Richtung der Längsachse abwechselnd Misch- und Ruhezonen angeordnet sind, durchgeführt wird, wobei das Volumsverhältnis des mit den halogenierten Kohlenwasserstoffen beladenen wässrigen Systems zu den Paraffinölen zwischen 10: 1 und 40: 1 beträgt.

Die Paraffinfraktion kann sowohl aus n-Paraffinen als auch aus iso-Paraffinen und Gemischen davon bestehen.

Die Löslichkeit der Paraffine in Wasser liegt unter 1 ppm, reines Undecan ist beispielsweise nur zu 30 ppb in Wasser löslich. Ins Gewicht fällt auch die völlige physiologische Unbedenklichkeit solcher Paraffinfraktionen und der günstige Preis dieser Produkte in technischer Qualität.

Das Extraktionsmittel ist am Arbeitsplatz ohne Gesundheitsgefährdung handhabbar und stellt selbst in größeren Mengen keine Belastung für die Umwelt dar. Das gereinigte Abwasser (Raffinat) kann ohne weitere Nachbehandlung in den Vorfluter abgelassen oder weiter verwendet werden.

Die eingesetzte Paraffinfraktion zeichnet sich weiters durch extrem hohe Verteilungskoeffizienten der halogenierten Kohlenwasserstoffe bei Verteilung zwischen Paraffinfraktion und Wasser aus. Der Verteilungskoeffizient hat für alle Systeme stets einen sehr viel größeren Wert als 1.

Das Volumenverhältnis von Extraktionsmittel zur wässrigen Phase kann innerhalb der genannten Bereiche variiert werden, wobei Parameter, wie Verteilungsgleichgewicht, Ein- und Austrittskonzentration der halogenierten Kohlenwasserstoffe in beiden Phasen, Apparatebelastbarkeit und physiologisch und wirtschaftlich nötige und mögliche Grenzwerte entscheidend sind. Im Vergleich zu bestehenden Abtrennungs- oder Reinigungsmöglichkeiten gewährleistet das erfindungsgemäße Verfahren bei äußerst hohem Reinigungseffekt eine sehr große Flexibiltität und universelle Einsetzbarkeit in allen Sparten der Industrie.

Bei der erfindungsgemäß vorgesehenen Extraktion und Phasentrennung in der Gegenstromkolonne, welche minimalen Extraktionsmittelaufwand gewährleistet, kann die intensive Durchmischung von wässriger Phase und Extraktionsmittel erreicht werden, wobei der Vorteil gegeben ist, daß in den Ruhezonen wenigstens teilweise Koaleszenz des dispergierten Extraktionsmittels stattfindet.

Die Auftrennung der organischen Phase, welche die halogenierten Kohlenwasserstoffe aus den wässrigen Systemen praktisch zur Gänze augenommen hat, mittels destillativer Methode läßt sich besonders investitions- und betriebskostengünstig durchführen, da die Siedepunktsdifferenz zwischen den halogenierten Kohlenwasserstoffen und der als Extraktionsmittel eingesetzten Paraffinfraktion in jedem Fall zumindest 20° beträgt.

In der Rektifizier- oder Regenerierkolonne stellt das Extraktionsmittel stets den Sumpfstrom dar, weswegen beim erfindungsgemäßen Verfahren im ganzen betrachtet nur ein vergleichsweise geringer Aufwand an thermischer Energie erforderlich ist.

Infolge der großen Differenz zwischen den Siedeintervallen fallen beide Ströme, u. zw. sowohl der Strom von halogenierten Kohlenwasserstoffen, welcher am Kopf der Regenerierkolonne abgezogen wird, als auch der Strom der Paraffinfraktion vom Sumpfbereich der Rektifizierkolonne in großer Reinheit an und können sofort wieder verwendet werden.

Durch die Kombination von Extraktion und thermischer Regeneration der organischen Phase ergibt sich infolge der vollständigen Kreislaufführung der Betriebsstoffe ein effektives und wirtschaftliches Abtrenn- und Rückgewinnungsverfahren.

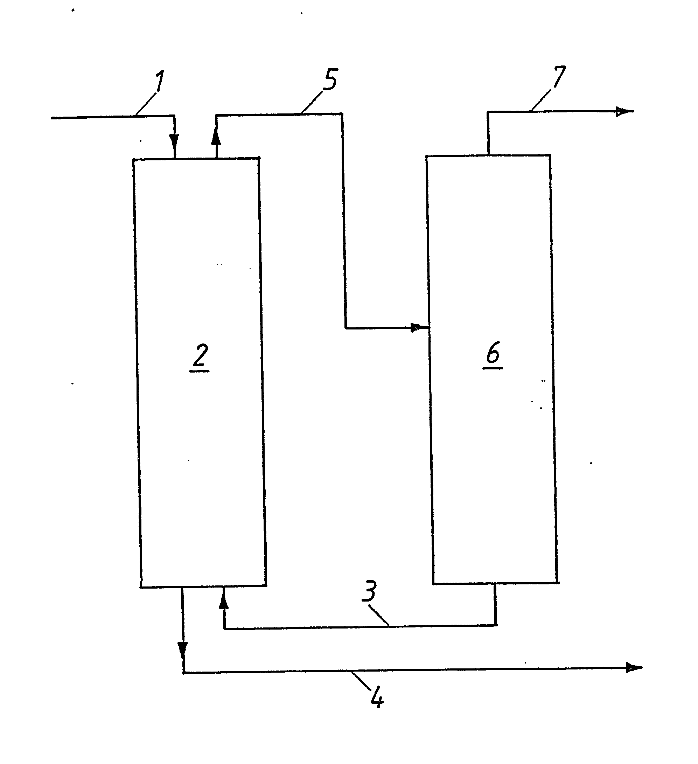

Das erfindungsgemäße Verfahren ist anhand einer Ausführungsform in dem in der Figur dargestellten Verfahrensschema veranschaulicht.

Aus einer Leitung 1 gelangt ein mit halogenierten Kohlenwasserstoffen beladenes wässriges System in eine mit 2 bezeichnete in Richtung der Längsachse Misch- und Ruhezonen aufweisende Extraktionskolonne. Im Gegenstrom zu der wässrigen Phase wird reines Extraktionsmittel über die Leitung 3 in die Kolonne 2 geleitet. Die von halogenierten Kohlenwasserstoffen befreite wässrige Phase wird durch die Leitung 4 abgezogen. Das mit den halogenierten Kohlenwasserstoffen beladene Extraktionsmittel - die Paraffinfraktion - wird über die Leitung 5 einer Rektifizierkolonne 6 zugeführt, in welcher die Auftrennung in die halogenierten Kohlenwasserstoffe und die Paraffinfraktion stattfindet. Die auf diese Weise aus dem wässrigen System rückgewonnenen halogenierten Kohlenwasserstoffe verlassen den Kopf der Kolonne 6 über die Leitung 7 und werden einer Wiederverwendung zugeführt. Das regenerierte Extraktionsmittel gelangt vom Bodenbereich der Kolonne 6 durch die Leitung 3 unmittelbar wieder in die Gegenstromkolonne 2.

Die Erfindung wird durch folgendes Beispiel, dem Vergleichsbeispiele 1 - 3 nachgeordnet sind, näher erläutert:

## Beispiel:

Waschwasser mit einer Beladung vom 0,7 g 1,1,1-Trichloräthan pro 1 wurde in einer Gegenstromkolonne mit dem Extraktionsmittel, Paraffinfraktion (Siedebereich 190-210°C) in Kontakt gebracht. Das eingestellte Verhältnis der Volumsdurchsätze Waschwasser/Extraktionsmittel betrug 30.

Im aus der Kolonne abgezogenen extrahierten Waschwasser konnte kein 1,1,1-Trichloräthan mehr festgestellt werden.

Der Gehalt an Extraktionsmittel im Waschwasser war gaschromatographisch ebenfalls nicht feststellbar.

## Vergleichsbeispiel 1:

Wasser mit einer Beladung von 0,74 g 1,1,1-Trichloräthan pro 1 als wässriges System wurde einstufig mit einer Paraffinfraktion (Siedebereich 190 bis 210°C) in Kontakt gebracht. Das Volumsverhältnis wässriges System/Extraktionsmittel betrug 30.

Nach Absetzen und Phasentrennung wurden im Abwasser noch 93 ppm 1,1,1-Trichloräthan gefunden. Der Gehalt an Extraktionsmittel im Abwasser war gaschromatographisch nicht feststellbar.

## Vergleichsbeispiel 2:

Abwasser mit einer Beladung vom 0,74 g 1,1,1-Trichloräthan pro 1 wurde in einer zweistufigen Gegenstrom-Mischer-Absetzer-Anlage mit Extraktionsmittel gemäß Beispiel 1 in Kontakt gebracht. Das Volumsverhältnis Abwasser/Extraktionsmittel betrug 5.

Dabei wurden nach der ersten Stufe ein 1,1,1-Trichloräthangehalt von 15,6 ppm und nach der zweiten Stufe ein Gehalt von 2,5 ppm im Abwasser festgestellt. Der Gehalt an Extraktionsmittel im gereinigten Abwasser war gaschromatographisch nicht feststellbar.

## Vergleichsbeispiel 3:

Abwasser mit einer Beladung von 2,3 g Chloroform pro 1 wurde in einer zweistufigen Gegenstrom-Mischer-Absetzer-Anlage mit Extraktionsmittel gemäß Beispiel 1 in Kontakt gebracht. Das Volumsverhältnis Abwasser/Extraktionsmittel betrug 10.

Dabei wurden nach der ersten Stufe ein Chloroformgehalt von 150 ppm und nach der zweiten Stufe von weniger als 10 ppm festgestellt. Der Gehalt an Extraktionsmittel im extrahierten Abwasser war gaschromatographisch nicht feststellbar.

## Patentansprüche

Verfahren zur Abtrennung und Rückgewinnung von halogenierten Kohlenwasserstoffen aus wässerigen Systemen durch flüssig-flüssig-Extraktion mit Paraffinölen, Phasentrennung und Destillation der organischen Phase, dadurch gekennzeichnet, daß die Extraktion im Gegenstrom in einer Kolonne, in welcher in Richtung der Längsachse abwechselnd Misch- und Ruhezonen angeordnet sind, durchgeführt wird, wobei das Volumsverhältnis des mit den halogenierten Kohlenwasserstoffen beladenen wässerigen Systems zu den Paraffinölen zwischen 10: 1 bis 40: 1 beträgt.

## Claim

A method for the separation and recovery of halogenated hydrocarbons from aqueous systems by means of liquid-liquid extraction using paraffin oils, phase separation, and distillation of the organic phase, characterised in that extraction is carried out in counterflow in a column in which mixing zones and rest zones are disposed alternately in the direction of the longitudinal axis, the volume ratio of the aqueous system charged with the halogenated hydrocarbons to the paraffin oils being between 10: 1 and 40: 1.

## Revendication

Procédé de séparation et de récupération de carbures d'hydrogène halogénés à partir de systèmes aqueux par extraction liquide-liquide à l'aide d'huiles de paraffine, séparation de phases et distillation de la phase organique, caractérisé en ce que l'extraction est effectuée à contre-courant dans une colonne dans laquelle sont disposées alternativement dans le sens de l'axe longitudinal des zones de mélange et de repos, le rapport des volumes entre le système aqueux chargé par les carbures d'hydrogène halogénés et les huiles de paraffine étant compris entre 10 pour 1 et 40 pour 1.